# FASCICULE DE BREVET EUROPEEN

(11) **EP 3 914 472 B1**
(45) Date de publication et mention de la délivrance du brevet: **14.08.2024**
(21) Numéro de dépôt: 19842794.0
(22) Date de dépôt: 09.12.2019
(51) Int. Cl.: B60L 58/26, H01M 10/663, H01M 10/6567, H01M 10/63, B60K 11/02, H01M 10/66, H01M 10/625, H01M 10/613, B60L 50/61, B60L 50/60, B60L 3/12, B60L 3/00, B60L 1/02, B60H 1/00, B60L 1/00, B60K 1/00

(54) **PROCEDE DE DIAGNOSTIC D'EFFICACITE D'UN CIRCUIT DE REFROIDISSEMENT D'UNE BATTERIE**
VERFAHREN ZUR DIAGNOSE DER EFFIZIENZ EINES BATTERIEKÜHLKREISLAUFES
METHOD FOR DIAGNOSING THE EFFICIENCY OF A BATTERY COOLING CIRCUIT

(30) Priorité: 22.01.2019 FR 1900515
(43) Date de publication de la demande: 01.12.2021
(73) Titulaire: Stellantis Auto SAS, 78300 Poissy (FR)
(72) Inventeur: MIQUEL, Claire, 95220 Herblay (FR); CALMELS, David, 78860 St Nom La Breteche (FR); ROUF, Hugo, 25200 Grand Charmont (FR)
(86) Numéro de dépôt international: PCT/FR2019/052979
(87) Numéro de publication internationale: WO 2020/152404

(56) Documents cités:
- DE-A1- 102007 004 979
- DE-A1- 102017 217 685
- DE-B3- 102013 008 743
- FR-A1- 3 043 604
- FR-A1- 3 091 839
- US-A- 5 834 132
- US-A1- 2016 006 060
- US-B2- 9 096 134

## Description

La présente invention porte sur un procédé de diagnostic d'efficacité d'un circuit de refroidissement d'une batterie. L'invention trouve une application particulièrement avantageuse avec les dispositifs de contrôle-commande de véhicules hybrides ou électriques.

De tels véhicules comportent une ou plusieurs machines électriques tournantes utilisées pour assurer la propulsion du véhicule fonctionnant en mode électrique. Ces machines électriques sont alimentées par au moins une batterie haute tension via au moins un onduleur. Ces composants électriques étant fortement sollicités, la température augmente par effet joule, ce qui nécessite la mise en place d'un circuit de refroidissement adapté.

Le circuit de refroidissement, dit très basse température, comporte un échangeur thermique couplé à un circuit de climatisation ainsi qu'une pompe pilotée pour faire circuler le liquide caloporteur, tel que de l'eau contenant de l'antigel, à l'intérieur de la batterie d'alimentation.

On connait par exemple des documents de brevet DE-A1-102017217685 un procédé de diagnostic de fonctionnement d'un circuit de refroidissement d'au moins une batterie d'une machine électrique tournante- pour un véhicule automobile.

On connait en outre du document de brevet DE-B3-102013008743 un procédé conforme au préambule de la revendication 1.

En effet, l'état thermique de ces composants a un rôle direct sur les performances et la disponibilité du système de propulsion, de récupération électrique, et de charge électrique du véhicule. Il existe donc le besoin de résoudre des problématiques liées à la surchauffe des composants du circuit très basse température rendant impossible l'utilisation de la machine électrique en mode hybride ou électrique.

L'invention vise à combler efficacement ce besoin en proposant un procédé de diagnostic de fonctionnement d'un circuit de refroidissement d'au moins une batterie d'une machine électrique tournante pour un véhicule automobile, ledit circuit de refroidissement comportant notamment un échangeur thermique et une pompe pour faire circuler un liquide de refroidissement dans ledit circuit de refroidissement, ledit procédé comportant :
- une étape de mesure d'une température du liquide de refroidissement dans le circuit de refroidissement,
- une étape de détermination d'un seuil de température,
- une étape de surveillance par comparaison de la température du liquide de refroidissement avec le seuil de température,- et dans le cas où la température du liquide de refroidissement dépasse le seuil de température, ledit procédé comporte une étape d'enclenchement d'un mode de fonctionnement dégradé, le seuil de température étant estimé à partir d'un barycentre entre une température d'air extérieure et une température de composants de la batterie, et l'étape de surveillance étant enclenchée uniquement si les conditions suivantes préalables à sa réalisation sont vérifiées :
- aucune remontée de défaut de la pompe,
- aucune remontée de défaut électrique sur un capteur de liquide de refroidissement associé à la batterie,
- aucune remontée de défaut de présence de liquide de refroidissement par la batterie,
- un compresseur de climatisation est activé,
- une électrovanne de l'échangeur thermique est activée sans remontée de défaut électrique,
- une température d'air extérieur est stable depuis une durée prédéterminée.

L'invention permet ainsi d'assurer une surveillance du besoin de refroidissement de la batterie de puissance, afin d'éviter une situation de vie dans laquelle l'utilisation du mode de fonctionnement électrique du véhicule automobile n'est plus possible. L'invention permet ainsi d'augmenter la durabilité des composants en évitant des surchauffes répétées importantes de la batterie.

Selon une mise en oeuvre, le mode de fonctionnement dégradé est enclenché si la température du liquide de refroidissement reste supérieure au seuil de température au moins pendant une durée prédéterminée. Cette durée permet de confirmer que la surchauffe n'est pas ponctuelle et s'inscrit bien dans la durée.

Selon une mise en oeuvre, le mode de fonctionnement dégradé consiste à réaliser au moins une opération, de préférence toutes les opérations, parmi:
- un redémarrage d'un moteur thermique dans le cas où le véhicule automobile est du type hybride,
- un arrêt de la machine électrique tournante,
- une demande de pilotage de la pompe à son débit maximum.

Selon une mise en oeuvre, l'étape de surveillance est activée dans le cas où les conditions préalables sont vérifiées au moins pendant une durée prédéterminée.

Selon une mise en oeuvre, ledit procédé comporte en outre une étape de remontée d'un défaut vers un calculateur apte à piloter un enclenchement du mode de fonctionnement dégradé.

L'invention a également pour objet un calculateur comportant une mémoire stockant des fonctions logicielles pour la mise en oeuvre du procédé de diagnostic de fonctionnement d'un circuit de refroidissement tel que précédemment défini.

L'invention concerne en outre un véhicule automobile comportant un calculateur tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'un circuit de refroidissement basse température avec lequel est mis en oeuvre le procédé de diagnostic selon la présente invention;
[Fig. 2] La figure 2 est une représentation schématique d'une architecture fonctionnelle selon l'invention du diagnostic de fonctionnement du circuit très basse température;
[Fig. 3] La figure 3 est une représentation schématique fonctionnelle des différentes étapes du procédé selon l'invention de diagnostic de fonctionnement du circuit très basse température;
[Fig. 4] La figure 4 montre des graphiques temporels représentant des signaux observables lors de la mise en oeuvre du procédé de diagnostic de fonctionnement du circuit de refroidissement.

Les éléments identiques, similaires, ou analogues conservent la même référence d'une figure à l'autre.

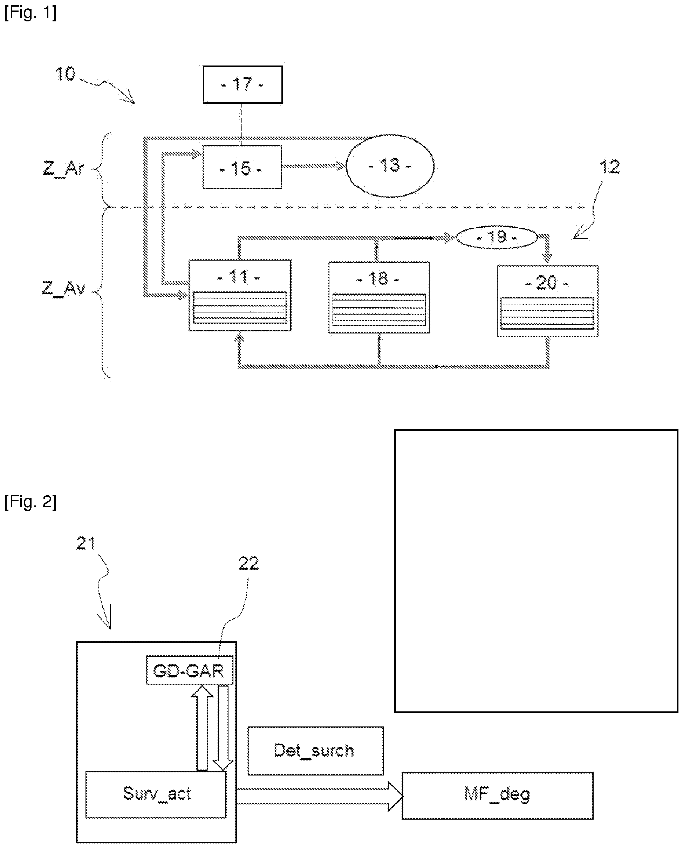

La figure 1 montre un circuit de refroidissement 10, dit très basse température, comportant un échangeur thermique 11 couplé à un circuit de climatisation 12 ainsi qu'une pompe pilotée 13 pour faire circuler le liquide caloporteur, tel que de l'eau contenant de l'anti-gel, dans le circuit de refroidissement, notamment à l'intérieur d'une batterie 15 d'alimentation d'une machine électrique tournante 17. La batterie 15 pourra notamment présenter une tension de fonctionnement de 24 Volts ou de 48 Volts, voire une tension supérieure. La batterie 15 et la pompe 13 sont disposées dans la zone arrière Z_Ar du véhicule, tandis que le circuit de climatisation 12 ainsi que l'échangeur thermique 11 sont disposés dans la zone avant Z_Av du véhicule automobile. L'échangeur thermique assure un échange thermique entre le liquide de refroidissement du circuit de refroidissement 10 et le fluide caloporteur du circuit de climatisation 12.

Le circuit de climatisation 12 comporte un évaporateur 18 au sein duquel un fluide réfrigérant absorbe la chaleur de l'air de l'habitacle en changeant d'état physique, c'est-à-dire en passant totalement en phase gazeuse. En sortie de l'évaporateur 18, le gaz frigorigène circule dans les canalisations jusqu'à un compresseur 19 dans lequel il est comprimé. Le gaz frigorigène haute pression en sortie du compresseur 19 est introduit dans un condenseur 20 au sein duquel le gaz frigorigène cède sa chaleur à l'air extérieur traversant le condenseur 20 grâce à l'avancement du véhicule et/ou au fonctionnement d'un groupe moto-ventilateur. Ce faisant, le fluide frigorigène change à nouveau d'état physique et repasse totalement en phase liquide.

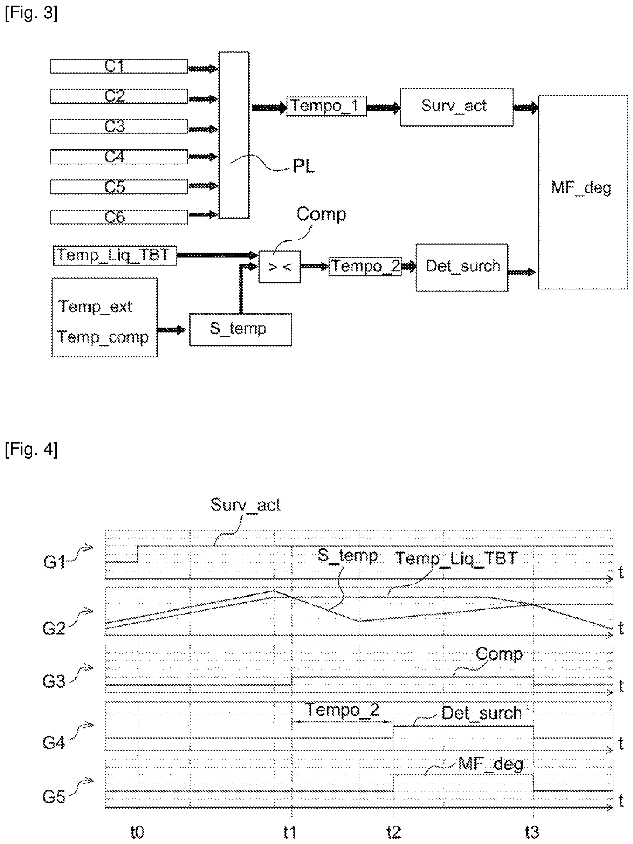

On décrit ci-après, en référence avec les figures 2 et 3, un procédé de diagnostic de fonctionnement du circuit de refroidissement 10 de la batterie 15.

A cet effet, un calculateur 21 qui pourra être le calculateur moteur ou un calculateur dédié, notamment un calculateur dit "OBD" (pour "On-Board Diagnostic") est destiné à retourner des diagnostics de fonctionnement de composants du moteur et de ses circuits annexes. Le calculateur 21 comporte une mémoire 22 stockant des fonctions logicielles pour la mise en oeuvre du procédé selon l'invention.

En cas de remontée d'un défaut lié à une surchauffe de la batterie 15, un module de gestion de diagnostic (GD) confirme le diagnostic, tandis qu'un module de gestion d'actions de reconfiguration (GAR) est apte à piloter, suite à une détection Det_surch d'une surchauffe du liquide de refroidissement du circuit 10, l'enclenchement d'un mode de fonctionnement dégradé MF_Deg décrit plus en détails ci-après.

Plus précisément, comme on peut le voir sur la figure 3, le calculateur 21 s'assure préalablement à l'activation de la surveillance de la température du liquide de refroidissement que les conditions C1-C6 sont vérifiées via une porte logique PL de type "ET".

La condition C1 correspond au fait qu'aucun défaut de la pompe pilotée 13 n'est remonté.

La condition C2 correspond au fait qu'aucun défaut électrique sur un capteur de température du liquide de refroidissement associé à la batterie 15 n'est remonté.

La condition C3 correspond au fait qu'aucun défaut de présence de liquide de refroidissement n'est remonté par la batterie 15.

La condition C4 correspond au fait que le compresseur 19 de climatisation est activé, notamment avec un régime positif.

La condition C5 correspond au fait que l'électrovanne de l'échangeur thermique 11 est activée sans remontée de défaut électrique.

La condition C6 correspond au fait que la température d'air extérieur est stable depuis une durée prédéterminée.

Ces conditions préalables C1-C6 permettent de garantir une détection de diagnostic robuste. La surveillance Surv_act du diagnostic d'efficacité du système de refroidissement est activée dans le cas où les conditions préalables sont vérifiées au moins pendant une durée prédéterminée Tempo_1. La durée Tempo_1 est par exemple comprise entre 1 seconde et 2 secondes.

Le calculateur 21 mesure une température du liquide de refroidissement Temp_liq_TBT dans le circuit de refroidissement 10, notamment à proximité de la batterie 15.

Le calculateur 21 détermine également un seuil de température S_temp. Ce seuil de température est composé d'un barycentre entre une température d'air extérieure Temp_ext et une température de composants Temp_comp de la batterie 15 permettant d'évaluer une température d'ambiance au niveau de l'environnement de la batterie 15. En variante, le seuil de température S_temp pourrait être un seuil fixe prédéterminé.

Le calculateur 21 assure alors une surveillance par comparaison, via un comparateur Comp, de la température du liquide de refroidissement Temp_liq_TBT avec le seuil de température S_temp. Dans le cas où la température du liquide de refroidissement Temp_liq_TBT dépasse le seuil de température S_temp, le calculateur 21 enclenche le mode de fonctionnement dégradé MF_Deg.

Le mode de fonctionnement dégradé MF_Deg consiste à réaliser au moins une opération, de préférence toutes les opérations, parmi:
- un redémarrage du moteur thermique dans le cas où le véhicule est du type hybride,
- un arrêt de la machine électrique tournante 17 afin de protéger la batterie 15 en évitant sa détérioration dans le cas d'un fonctionnement en surchauffe,
- une demande de pilotage de la pompe 13 à son débit maximum afin d'évacuer au maximum la chaleur générée par la batterie 15 et optimiser ainsi son refroidissement.

Le mode de fonctionnement dégradé MF_Deg est enclenché de préférence uniquement si la température du liquide de refroidissement reste supérieure à ce seuil estimé au moins pendant une durée prédéterminée Tempo_2, notamment comprise entre 30s et 200s, et de préférence de l'ordre de 120s. Cette durée Tempo_2 permet de confirmer que la surchauffe n'est pas ponctuelle et s'inscrit bien dans la durée. En outre, le calculateur 21 doit pouvoir vérifier que les conditions d'activation C1_C6 de la surveillance du diagnostic ont bien été observées pendant la durée Tempo_1 pour en déduire qu'il existe réellement un défaut au niveau du circuit de refroidissement 10. Ainsi, pour que le mode de fonctionnement dégradé MF_Deg soit enclenché, il faut que la surveillance Surv_act soit activée suite à la vérification des conditions C1-C6 au moins pendant la durée Tempo_1 et qu'une surchauffe Det_surch soit détectée au moins pendant la durée Tempo_2.

La figure 4 montre des graphiques temporels représentant des signaux observables lors de la mise en oeuvre du procédé de diagnostic de fonctionnement du circuit de refroidissement 10.

Le graphique G1 met en évidence une activation de la surveillance du diagnostic Surv_act à l'instant t0 à partir du moment où toutes les conditions C1-C6 préalables à l'activation du diagnostic ont été vérifiées pendant la durée tempo_1.

Le graphique G2 illustre l'évolution de la température du liquide de refroidissement Temp_liq_TBT dans le circuit très basse température 10 par rapport au seuil de température barycentrique S_temp.

Le graphique G3 met en évidence la zone située entre les instants t1 et t3, pendant laquelle la température du liquide de refroidissement Tem_liq_TBT dépasse le seuil de température barycentrique S_temp (la température du liquide de refroidissement du circuit très basse température 10 reste élevée, bien que la batterie 15 haute tension soit devenue plus froide).

A partir du moment où le dépassement du seuil S_temp est constaté à l'instant t1, la temporisation Tempo_2 s'enclenche pour déterminer si cette situation est ponctuelle ou si cette situation s'installe dans la durée.

Le graphique G4 montre qu'à la fin de la durée de temporisation Tempo_2 de l'ordre de 120s se produisant à l'instant t3, un défaut de détection de surchauffe Det_surch est remonté. La temporisation Tempo_2 permet de confirmer que le problème de surchauffe du liquide de refroidissement n'est pas ponctuel et qu'un défaut est à traiter.

Le graphique G5 illustre l'envoi d'un signal de diagnostic aux modules GD-GAR qui active le mode de fonctionnement dégradé MF_Deg consistant à demander un pilotage de la pompe 13 à son débit maximum, un arrêt de la machine électrique 17, et un redémarrage du moteur thermique. Ce mode de fonctionnement dégradé MF_Deg est ainsi déclenché si la surveillance du diagnostic est activée et si le défaut est détecté.

Le diagnostic retombe et le mode de fonctionnement dégradé MF_Deg est arrêté à partir de l'instant t3 où le défaut n'est plus constaté, c'est-à-dire lorsque la température du liquide de refroidissement du circuit 10 repasse en-dessous du seuil de température barycentrique à l'instant t3.

En variante, il aurait pu être possible d'embarquer un fonctionnement d'hystérésis sur la température du liquide de refroidissement du circuit 10 suivant lequel le mode de fonctionnement dégradé MF_Deg est enclenché lorsque la température du liquide de refroidissement Temp_liq_TBT dépasse un premier seuil de température et est annulé lorsque la température du liquide de refroidissement Temp_liq_TBT repasse sous un deuxième seuil de température inférieur au premier seuil.
En variante, dans une mise en oeuvre dégradée du procédé, on ne tient pas compte des conditions préalables C1-C6. Le mode de fonctionnement dégradé MF_Deg est alors enclenché dès que la température du liquide de refroidissement Temp_liq_TBT dépasse le seuil de température S_Temp.

## Revendications

1. Procédé de diagnostic de fonctionnement d'un circuit de refroidissement (10) d'au moins une batterie (15) d'une machine électrique tournante (17) pour un véhicule automobile, ledit circuit de refroidissement (10) comportant notamment un échangeur thermique (11) et une pompe (13) pour faire circuler un liquide de refroidissement dans ledit circuit de refroidissement, ledit procédé comportant:
- une étape de mesure d'une température du liquide de refroidissement (Temp_liq_TBT) dans le circuit de refroidissement (10),
- une étape de détermination d'un seuil de température (S_Temp),
- une étape de surveillance (Surv_act) par comparaison de la température du liquide de refroidissement (Temp_liq_TBT) avec le seuil de température (S_temp),
- et dans le cas où la température du liquide de refroidissement (Temp_liq_TBT) dépasse le seuil de température (S_temp), ledit procédé comporte une étape d'enclenchement d'un mode de fonctionnement dégradé (MF_Deg),
**caractérisé en ce que** le seuil de température (S_temp) est estimé à partir d'un barycentre entre une température d'air extérieure (Temp_ext) et une température de composants (Temp_comp) de la batterie (15), et **en ce que** l'étape de surveillance (Surv_act) est enclenchée uniquement si les conditions suivantes préalables à sa réalisation sont vérifiées:
- aucune remontée de défaut de la pompe (13),
- aucune remontée de défaut électrique sur un capteur de liquide de refroidissement associé à la batterie (15),
- aucune remontée de défaut de présence de liquide de refroidissement par la batterie (15),
- un compresseur de climatisation (19) est activé,
- une électrovanne de l'échangeur thermique (11) est activée sans remontée de défaut électrique,
- une température d'air extérieur est stable depuis une durée prédéterminée.

2. Procédé selon la revendication 1, **caractérisé en ce que** le mode de fonctionnement dégradé (MF_Deg) est enclenché si la température du liquide de refroidissement (Temp_liq_TBT) reste supérieure au seuil de température (S_temp) au moins pendant une durée prédéterminée (Tempo_2).

3. Procédé selon la revendication 1 ou 2, **caractérisé en ce que** le mode de fonctionnement dégradé (MF_Deg) consiste à réaliser au moins une opération, de préférence toutes les opérations, parmi:
- un redémarrage d'un moteur thermique dans le cas où le véhicule automobile est du type hybride,
- un arrêt de la machine électrique tournante (17),
- une demande de pilotage de la pompe (13) à son débit maximum.

4. Procédé selon l'une quelconque des revendications 1 à 3, **caractérisé en ce que** l'étape de surveillance (Surv_act) est activée dans le cas où les conditions préalables sont vérifiées au moins pendant une durée prédéterminée (Tempo_1).

5. Procédé selon l'une quelconque des revendications 1 à 4, **caractérisé en ce qu'**il comporte en outre une étape de remontée d'un défaut vers un calculateur (21) apte à piloter un enclenchement du mode de fonctionnement dégradé (MF_Deg).

6. Calculateur (21) comportant une mémoire (22) stockant des fonctions logicielles pour la mise en oeuvre du procédé de diagnostic de fonctionnement d'un circuit de refroidissement (10) tel que défini selon l'une quelconque des revendications précédentes.

7. Véhicule automobile **caractérisé en ce qu'**il comporte un calculateur (21) tel que défini selon la revendication 6

## Patentansprüche

1. Verfahren zur Diagnose des Betriebs eines Kühlkreislaufs (10) mindestens einer Batterie (15) einer rotierenden elektrischen Maschine (17) für ein Kraftfahrzeug, wobei der Kühlkreislauf (10) insbesondere einen Wärmetauscher umfasst (11) und eine Pumpe (13) zum Umwälzen einer Kühlflüssigkeit im Kühlkreislauf, wobei das Verfahren Folgendes umfasst:
- einen Schritt des Messens einer Temperatur des Kühlmittels ( Temp_liq_TBT ) im Kühlkreislauf (10),
- einen Schritt zum Bestimmen eines Temperaturschwellenwerts ( S_Temp ),
- einen Überwachungsschritt ( Surv_act ) durch Vergleich der Temperatur des Kühlmittels ( Temp_lig_TBT ) mit dem Temperaturschwellenwert ( S_tem p),
- und für den Fall, dass die Temperatur des Kühlmittels ( Temp_liq_TBT ) den Temperaturschwellenwert ( S_temp ) überschreitet, umfasst das Verfahren einen Schritt des Einschaltens eines verschlechterten Betriebsmodus ( MF_Deg ).
gekennzeichnet, dass der Temperaturschwellenwert ( S_temp ) aus einem Schwerpunkt zwischen einer Außenlufttemperatur ( Temp_ext ) und einer Komponententemperatur ( Temp_comp ) der Batterie (15) geschätzt wird und dass der Überwachungsschritt ( Surv_act ) nur dann ausgelöst wird, wenn die Bedingungen
Folgende Voraussetzungen für die Verwirklichung werden geprüft:
- kein Pumpenfehler (13),
- Es wurde kein elektrischer Fehler an einem Flüssigkeitssensor gemeldet Kühlung der Batterie (15),
- Keine Fehlermeldung über das Vorhandensein von Kühlmittel durch das Batterie (15),
- ein Klimakompressor (19) aktiviert wird,
- ein Magnetventil des Wärmetauschers (11) wird ohne Anstieg aktiviert elektrischer Fehler,
- eine Außenlufttemperatur über einen vorgegebenen Zeitraum stabil war.

2. Verfahren nach Anspruch 1, **dadurch gekennzeichnet, dass** der verschlechterte Betriebsmodus ( MF_Deg ) eingelegt wird, wenn die Temperatur der **Kühlflüssigkeit** ( Temp_liq_TBT ) zumindest für eine vorgegebene Dauer (Tempo_2) über dem Temperaturschwellenwert ( S_temp ) bleibt.

3. Verfahren nach Anspruch 1 oder 2, **dadurch gekennzeichnet, dass** dass der herabgesetzte Betriebsmodus ( MF_Deg ) darin besteht, mindestens eine Operation, vorzugsweise alle Operationen, durchzuführen, darunter:
- ein Neustart eines Wärmemotors, wenn es sich bei dem Kraftfahrzeug um einen Hybridtyp handelt,
- Stoppen der rotierenden elektrischen Maschine (17),
- eine Aufforderung, die Pumpe (13) auf ihren maximalen Durchfluss zu steuern.

4. Verfahren nach einem der Ansprüche 1 bis 3, **dadurch gekennzeichnet, dass** der Überwachungsschritt ( Surv_act ) aktiviert wird, wenn die Voraussetzungen mindestens für eine vorgegebene Dauer (Tempo_1) überprüft werden.

5. Verfahren nach einem der Ansprüche 1 bis 4, **dadurch gekennzeichnet, dass** es außerdem einen Schritt des Meldens eines Fehlers an einen Computer (21) umfasst, der in der Lage ist, ein Einschalten des herabgesetzten Betriebsmodus ( MF_Deg ) zu steuern.

6. Computer (21), der einen Speicher (22) umfasst, der Softwarefunktionen zur Implementierung des Verfahrens zur Diagnose des Betriebs eines Kühlkreislaufs (10) gemäß einem der vorhergehenden Ansprüche speichert.

7. Kraftfahrzeug, **dadurch gekennzeichnet, dass** es einen Computer (21) gemäß Anspruch 6 umfasst

## Claims

1. Method for diagnosing the operation of a cooling circuit (10) of at least one battery (15) of a rotating electrical machine (17) for a motor vehicle, said cooling circuit (10) including in particular a heat exchanger (11) and a pump (13) for circulating a cooling liquid in said cooling circuit, said method comprising:
- a step of measuring a temperature of the coolant ( Temp_liq_TBT ) in the cooling circuit (10),
- a step of determining a temperature threshold ( S_Temp ),
- a monitoring step ( Surv_act ) by comparing the temperature of the coolant ( Temp_lig_TBT ) with the temperature threshold ( S_tem p),
- and in the case where the temperature of the coolant ( Temp_liq_TBT ) exceeds the temperature threshold ( S_temp ), said method comprises a step of engaging a degraded operating mode ( MF_Deg ),
**characterized in that** the temperature threshold ( S_temp ) is estimated from a barycenter between an exterior air temperature ( Temp_ext ) and a component temperature ( Temp_comp ) of the battery (15), and **in that**' monitoring step ( Surv_act ) is triggered only if the conditions
following prerequisites for its realization are verified:
- no pump fault (13),
- no electrical fault reported on a liquid sensor cooling associated with the battery (15),
- no fault reporting of the presence of coolant by the battery (15),
- an air conditioning compressor (19) is activated,
- a solenoid valve of the heat exchanger (11) is activated without rising electrical fault,
- an outside air temperature has been stable for a predetermined period.

2. Method according to claim 1, **characterized in that** the
degraded operating mode ( MF_Deg ) is engaged if the temperature of the cooling liquid ( Temp_liq_TBT ) remains above the temperature threshold ( S_temp ) at least for a predetermined duration (Tempo_2).

3. Method according to claim 1 or 2, **characterized in that** that the degraded operating mode ( MF_Deg ) consists of carrying out at least one operation, preferably all operations, among:
- a restart of a thermal engine in the case where the motor vehicle is of the hybrid type,
- stopping the rotating electric machine (17),
- a request to control the pump (13) at its maximum flow rate.

4. Method according to any one of claims 1 to 3, **characterized in that** the monitoring step ( Surv_act ) is activated in the case where the preconditions are verified at least for a predetermined duration (Tempo_1).

5. Method according to any one of claims 1 to 4, **characterized in that** it further comprises a step of reporting a fault to a computer (21) capable of controlling an engagement of the degraded operating mode ( MF_Deg ).

6. Computer (21) comprising a memory (22) storing software functions for implementing the method for diagnosing the operation of a cooling circuit (10) as defined according to any one of the preceding claims.

7. Motor vehicle **characterized in that** it comprises a computer (21) as defined according to claim 6
